# EUROPÄISCHE PATENTSCHRIFT

(11) **EP 2 942 159 B1**
(45) Veröffentlichungstag und Bekanntmachung des Hinweises auf die Patenterteilung: **15.02.2017**
(21) Anmeldenummer: 14004305.0
(22) Anmeldetag: 19.12.2014
(51) Int. Cl.: B25F 3/00, B25F 5/00

(54) **Winkelschraub-Vorsatz**
Angled screwdriver offset
Adaptateur de vis d'angle

(30) Priorität: 19.12.2013 CN 201320842019 U
(43) Veröffentlichungstag der Anmeldung: 11.11.2015
(73) Patentinhaber: Metabowerke GmbH, 72622 Nürtingen (DE)
(72) Erfinder: Lu, Zhengguo, Shanghai 201114 (CN); Wang, Wei, Shanghai 201114 (CN); Wu, Rui, Shanghai City (CN); Xu, Lidong, Shanghai 201114 (CN); Zhang, Yiqian, Shanghai 201114 (CN)
(74) Vertreter: Markfort, Iris-Anne Lucie

(56) Entgegenhaltungen:
- EP-A1- 0 511 485
- EP-A2- 1 129 825
- EP-A2- 2 327 518
- EP-A2- 2 383 076
- WO-A1-2011/113736

## Beschreibung

### Technisches Gebiet:

Die vorliegende Erfindung betrifft das technische Gebiet der Zubehörteile für elektrisch angetriebene Werkzeuge, insbesondere eine Verbindungsvorrichtung zur Verbindung von elektrisch angetriebenem Werkzeug mit einer Winkelvorrichtung.

### Stand der Technik:

Verbindungsvorrichtungen zur Verbindung von elektrisch angetriebenem Werkzeug mit einer Winkelvorrichtung nach dem gegenwärtig vorhandenen Stand der Technik bestehen meistens aus einer axialen Befestigungsvorrichtung und einer Verbindungsumfassung, wobei durch diese beiden Konstruktionen gemeinsam die axiale Befestigung und der Drehwinkel der Winkelvorrichtung verwirklicht werden. Weil für die Verbindungsumfassung bei der Verwendung allerdings eine Positionierung und Arretierung entsprechend dem korrekten Winkel erforderlich ist, ist bei Drehen der Winkelvorrichtung außerdem Kraftaufwand zum Pressen erforderlich, um den Winkel drehen zu können. Daher bewirkt die gemeinsame Verwendung der beiden Konstruktionen, dass der gesamte Bedienungsablauf zeit-und kraftaufwändiger ist, was die Verwendung der Winkelvorrichtung extrem unbequem gestaltet.
Im Zusammenhang mit Werkzeugmaschinen ist aus der EP 2 327 518 A2 ein Vorsatz bekannt, der mit einer Antriebswelle drehfest verbindbar ist. Die Lösung weist einen Aufnahmestutzen und eine zugeordnete Hülse auf, die auf den Aufnahmestutzen aufschiebbar ist, sowie einen Spannring der mit Verriegelungsmitteln zusammenwirkt, um in einer Schließstellung eine Verriegelung der Hülse auf dem Aufnahmestutzen zu bewirken. Der Spannring ist in Axialrichtung beweglich gehalten und in Richtung auf eine Schließstellung vorgespannt.

### Inhalt:

Das durch die vorliegende Erfindung zu lösende technische Problem besteht in der Bereitstellung einer Verbindungsvorrichtung zur Verbindung von elektrisch angetriebenem Werkzeug mit einer Winkelvorrichtung, bei der eine flexiblere und bequemere Bedienung und Verwendung der Winkelvorrichtung an dem elektrisch angetriebenen Werkzeug möglich ist.

Zwecks Lösung des vorstehend bezeichneten technischen Problems sieht die vorliegende Erfindung die technische Konzeption mit den Merkmalen des Anspruchs 1 für eine Verbindungsvorrichtung zur Verbindung von elektrisch angetriebenem Werkzeug mit einer Winkelvorrichtung vor.

Diese umfasst eine gezahnte äußere Umfassung, einen Verriegelungskörper, mehrere Stahlkugeln, eine Feder und eine Federhalterung; wobei innerhalb der gezahnten äußeren Umfassung der Verriegelungskörper vorgesehen ist; wobei an dem Halsteil des Verriegelungskörpers entlang der Umfangsrichtung mehrere kugelförmige Einbuchtungsrillen vorgesehen sind; wobei innerhalb der kugelförmigen Einbuchtungsrillen Stahlkugeln aufgenommen sind; wobei der Verriegelungskörper durch die Stahlkugeln die radiale Positionierung zwischen der gezahnten äußeren Umfassung verwirklicht;
wobei an dem hinteren Teil des Verriegelungskörpers eine ringförmige Einbuchtungsrille vorgesehen ist und wobei innerhalb der ringförmigen Einbuchtungsrille eine Klemmfeder vorgesehen ist; wobei um das hintere Ende des Verriegelungskörpers eine Federhalterung vorgesehen ist, wobei die Federhalterung durch die Klemmfeder die axiale Positionierung mit dem Verriegelungskörper verwirklicht und wobei die Federhalterung mit einem Ende der Feder verbunden ist, während das andere Ende der Feder an die innere Endfläche der gezahnten äußeren Umfassung stößt.

Das vordere Ende der vorstehend bezeichneten gezahnten äußeren Umfassung weist eine Innenverzahnung auf, wobei die Innenverzahnung der gezahnten äußeren Umfassung auf eine entsprechende Außenverzahnung an dem elektrisch angetriebenen Werkzeug abgestimmt ist.

Das hintere Ende des vorstehend bezeichneten Verriegelungskörpers ist auf die Eingabeachsenkomponente des vorderen Teils der Winkelvorrichtung abgestimmt.

Die vorliegende Erfindung kann die nachstehend aufgeführten technischen Effekte darstellen:

Bei der vorliegenden Erfindung wird die axiale Befestigung der Winkelvorrichtung mit der Drehbedienung integriert ausgeführt, so dass eine effiziente Vereinfachung des Bedienungsablaufs der Verbindungsvorrichtung erfolgen kann und verschiedene Unbequemlichkeiten im Verlauf der Verwendung der verbundenen Drehwinkelvorrichtung entfallen.

Die vorliegende Erfindung ermöglicht die Verwirklichung einer stufenlosen Verbindung des elektrisch angetriebenen Werkzeugs mit der Winkelvorrichtung und ermöglicht das freie Drehen der Winkelvorrichtung.

Die vorliegende Erfindung gestattet nicht nur die Einsparung von Material und die Verringerung der Platzinanspruchnahme, sondern ermöglicht eine flexiblere und bequemere Bedienung und Verwendung der Winkelvorrichtung an dem elektrisch angetriebenen Werkzeug, was die Verwendungseffizienz wirksam erhöht.

### Erläuterung der Abbildungen:

Nachstehend aufgeführt erfolgt anhand der beigefügten Abbildungen sowie anhand praktischer Ausführungsbeispiele eine weitere detaillierte Erläuterung der vorliegenden Erfindung:

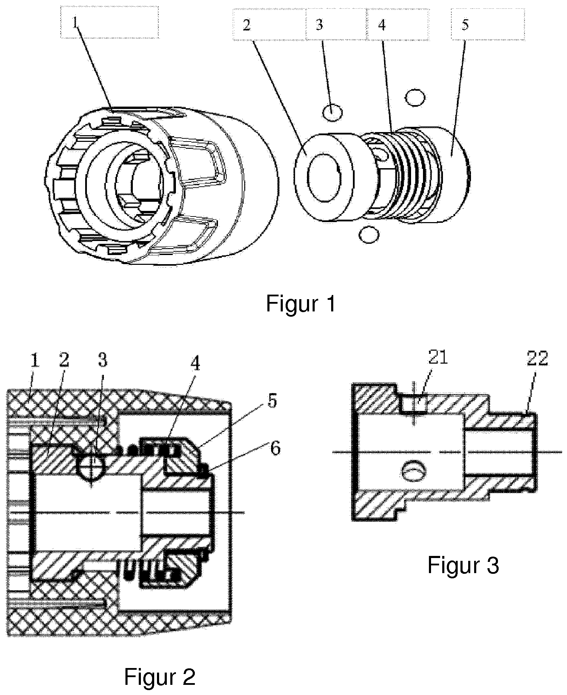

Bei Abbildung 1 handelt es sich um die dreidimensionale Darstellung der Verbindungsvorrichtung zur Verbindung von elektrisch angetriebenem Werkzeug mit einer Winkelvorrichtung nach der vorliegenden Erfindung.

Bei Abbildung 2 handelt es sich um die Schnittdarstellung der vorliegenden Erfindung.

Bei Abbildung 3 handelt es sich um Darstellung des Verriegelungskörpers der vorliegenden Erfindung.

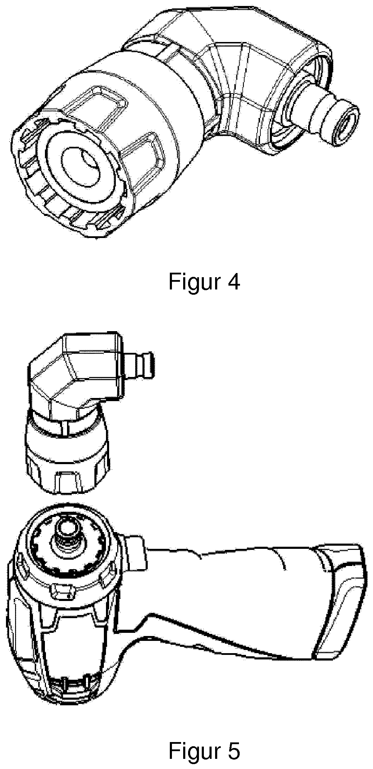

Bei Abbildung 4 handelt es sich um die Darstellung der Verbindung zwischen der erfindungsgemäßen Verbindungsvorrichtung und der Winkelvorrichtung.

Bei Abbildung 5 handelt es sich um die Darstellung der Verbindung der mit einer Winkelvorrichtung verbundenen erfindungsgemäßen Verbindungsvorrichtung mit einem elektrisch angetriebenen Werkzeug.

Erläuterung der Bezugszeichen in den Abbildungen:
1 Gezahnte äußere Umfassung
   2 Verriegelungskörper
3 Stahlkugel
   4 Feder
5 Federhalterung

   6 Klemmfeder
21 Kugelförmige Einbuchtungsrille
   22 Ringförmige Einbuchtungsrille

### Praktische Ausführungsbeispiele:

Wie in Abbildung 1 und Abbildung 2 gezeigt umfasst die Verbindungsvorrichtung zur Verbindung von elektrisch angetriebenem Werkzeug mit einer Winkelvorrichtung gemäß der vorliegenden Erfindung eine gezahnte äußere Umfassung 1, einen Verriegelungskörper 2, drei Stahlkugeln 3, eine Feder 4 und eine Federhalterung 5;

Das vordere Ende der gezahnten äußeren Umfassung 1 weist einen zahnförmigen Umriss auf, wobei der zahnförmige Umriss der gezahnten äußeren Umfassung 1 auf dem zahnförmigen Umriss an dem elektrisch angetriebenen Werkzeug abgestimmt ist; wobei innerhalb der gezahnten äußeren Umfassung 1 der Verriegelungskörper 2 vorgesehen ist;

Wie in Abbildung 3 gezeigt sind an dem Halsteil des Verriegelungskörpers 2 entlang der Umfangsrichtung drei kugelförmige Einbuchtungsrillen 31 vorgesehen sind, wobei innerhalb der kugelförmigen Einbuchtungsrillen 21 die Stahlkugeln 3 aufgenommen sind; wobei der Verriegelungskörper 2 durch die Stahlkugeln 3 die radiale Positionierung zwischen der gezahnten äußeren Umfassung 1 verwirklicht;

An dem hinteren Teil des Verriegelungskörpers 2 ist eine ringförmige Einbuchtungsrille 22 vorgesehen, wobei innerhalb der ringförmigen Einbuchtungsrille 22 eine Klemmfeder 6 vorgesehen ist;

Um das hintere Ende des Verriegelungskörpers 2 ist eine Federhalterung 5 vorgesehen, wobei die Federhalterung 5 durch die Klemmfeder 6 die axiale Positionierung mit dem Verriegelungskörper 2 verwirklicht und wobei die Federhalterung 5 mit einem Ende der Feder 4 verbunden ist, während das andere Ende der Feder 4 an die innere Endfläche der gezahnten äußeren Umfassung 1 stößt.

Bei der Verwendung ist das hintere Ende des Verriegelungskörpers 2 mit der Eingabeachsenkomponente des vorderen Teils der Winkelvorrichtung verbunden; wobei die Innenverzahnung des vorderen Endes der gezahnten äußeren Umfassung 1 mit dem elektrisch angetriebenen Werkzeug verbunden ist.

Das Betriebsprinzip der vorliegenden Erfindung ist wie nachstehend aufgeführt:

Wie in Abbildung 4 und Abbildung 5 gezeigt erfolgt zunächst durch Veranlassung von Ausdehnung und Kompression der an der Federhalterung 5 befindlichen Feder 4 das Pressen der an dem Verriegelungskörper 2 befindlichen Stahlkugeln 3, wobei durch die Stahlkugeln 3 Pressen und Arretierung des Verriegelungskörpers 2 mit der Winkelvorrichtung verwirklicht werden, um die axiale Befestigung zu vollziehen, wobei anschließend durch die Innenverzahnung der gezahnten äußeren Umfassung 1 die schnelle Verbindung mit dem elektrisch angetriebenen Werkzeug erfolgt und auf diese Weise die Verwirklichung der axialen Befestigung des elektrisch angetriebenen Werkzeugs mit der Winkelvorrichtung erfolgt.

Die Feder 4 kann das freie Drehen des Winkels der Winkelvorrichtung verwirklichen und ermöglicht einfachere Drehung und Bedienung der Winkelvorrichtung; wobei der Drehwinkel der Winkelvorrichtung durch die Anzahl der Innenzähne an der gezahnten äußeren Umfassung 1 und den Winkel zwischen den Zähnen kontrolliert wird und wobei gilt, dass je kleiner der Abstand zwischen den Zähnen ist, umso genauer die Präzision der Winkeleinstellung ist.

Bei dem vorliegenden Erfindung erfolgt durch Innenverzahnung der gezahnten äußeren Umfassung und der entsprechenden Außenverzahnung an dem elektrisch angetrieben Werkzeug die Verwirklichung der stufenlosen Verbindung, wobei keine Durchführung von Positionierung und Arretierung entsprechend dem korrekten Winkel wie etwa bei der Verbindungsumfassung erforderlich ist. Es ist möglich, entsprechend dem Bedarf die Anzahl der Zähne festzulegen, wobei, je höher die Anzahl der Zähne ist, der bei der Drehung erforderliche Drehwinkel umso kleiner ist und umso größer der Drehbereich der Winkelvorrichtung ist. Durch eng angeordnete Zahnumrisse kann der Drehablauf der Winkelvorrichtung bequemer gestaltet werden, wobei gleichzeitig der innerhalb befindliche Verriegelungskörper 2 durch Ausdehnung und Kompression der Feder die Stahlkugeln presst und auf bequeme und schnelle Weise die Verwirklichung der Arretierung mit dem elektrisch angetriebenen Werkzeug und die axiale Befestigung ermöglicht wird.

Die vorliegende Erfindung bewirkt eine einfachere Verwendung bei der Verbindung und dem Drehen der Winkelvorrichtung und ist für eine Serienfertigung geeignet, wobei eine umfassende Verwendung für verschiedene elektrisch angetriebene Werkzeuge möglich ist.

## Patentansprüche

1. Verbindungsvorrichtung zur Verbindung von elektrisch angetriebenem Werkzeug mit einer Winkelvorrichtung, wobei diese eine gezahnte äußere Umfassung (1), einen Verriegelungskörper (2), mehrere Stahlkugeln (3), eine Feder (4) und eine Federhalterung (5) umfasst; wobei innerhalb der äußeren Umfassung (1) der Verriegelungskörper (2) vorgesehen ist;
wobei an dem Halsteil des Verriegelungskörpers (2) entlang der Umfangsrichtung mehrere kugelförmige Einbuchtungsrillen (21) vorgesehen sind und wobei innerhalb der kugelförmigen Einbuchtungsrillen (21) die Stahlkugeln (3) aufgenommen sind; wobei der Verriegelungskörper (2) durch die Stahlkugeln (3) die radiale Positionierung zwischen der gezahnte äußeren Umfassung (1) verwirklicht;
wobei an dem hinteren Teil des Verriegelungskörpers(2) eine ringförmige Einbuchtungsrille (22) vorgesehen ist und wobei innerhalb der ringförmigen Einbuchtungsrille (22) eine Klemmfeder(6) vorgesehen ist;
wobei um das hintere Ende des Verriegelungskörpers die Federhalterung (5) vorgesehen ist, wobei die Federhalterung (5) durch die Klemmfeder (6) die axiale Positionierung mit dem Verriegelungskörper (2) verwirklicht und wobei die Federhalterung (5) mit einem Ende der Feder (4) verbunden ist, während das andere Ende der Feder (4) an eine innere Endfläche der gezahnte äußeren Umfassung (1) stößt
**dadurch gekennzeichnet, dass** das vordere Ende der gezahnte äußeren Umfassung (1) einen Innenverzahnung aufweist, wobei Innenverzahnung der gezahnten äußeren Umfassung (1) auf eine entsprechende Außenverzahnung an dem elektrisch angetriebenen Werkzeug abgestimmt ist, wobei über die Innenverzahnung der gezahnten äußeren Umfassung (1), die mit der entsprechenden Außenverzahnung an dem elektrisch angetriebenen Werkzeug in Eingriff bringbar ist, eine Arretierung der Verbindungsvorrichtung relativ zu dem elektrisch angetriebenen Werkzeug in der Umfangsrichtung ermöglicht wird.

2. Verbindungsvorrichtung zur Verbindung von elektrisch angetriebenem Werkzeug mit einer Winkelvorrichtung nach Anspruch 1, **dadurch gekennzeichnet, dass** das hintere Ende des Verriegelungskörpers (2) auf die Eingabeachsenkomponente des vorderen Teils der Winkelvorrichtung abgestimmt ist.

## Claims

1. A connecting device for connecting an electric tool with an angle adjuster, comprising a tooth-shaped jacket (1), a locking body (2), a number of steel balls (3), a spring (4) and a spring base (5), wherein the locking body (2) is provided within the tooth-shaped jacket (1);
wherein at a neck part of the locking body (2) there are provided a number of spherical grooves (21) being arranged in the circumferential direction and wherein the steel balls (3) are received within the spherical grooves (21); wherein the locking body (2) achieves the radial positioning between the tooth-shaped jacket (1) by means of the steel balls (3);
wherein there is provided an annular groove (22) on the rear part of the locking body (2) and wherein within the annular groove (22) there is provided a clamp spring (6);
wherein the spring base (5) is provided around the rear end of the locking body, wherein the spring base (5) achieves the axial positioning with the locking body (2) by means of the clamp spring (6) and wherein the spring base (5) is connected with one end of the spring (4), while the other end of the spring (4) abuts on the inner end surface of the tooth-shaped jacket (1),
**characterized in that**
the front end of the tooth-shaped jacket (1) comprises an internal toothing, wherein the internal toothing of the tooth-shaped jacket (1) matches a corresponding external toothing (1) on the electrical drive tool, wherein by means of the internal toothing of the tooth-shaped jacket (1), which can be engaged by the corresponding external toothing of the electrical tool, a locking of the connecting device relative to the electric tool in the circumferential direction is enabled.

2. A connecting structure for connection of the electric tool with an angular adjuster according to claim 1,
**characterized i n that**
the rear end of the locking body (2) is matched with the input axial compound of the front part of the angle adjuster.

## Revendications

1. Dispositif de connexion pour coupler un outil à entraînement électrique avec un dispositif d'angle, ce dernier comportant un entourage extérieur denté (1), un organe de verrouillage (2), plusieurs billes en acier (3), un ressort (4) et un élément de maintien de ressort (5); l'organe de verrouillage (2) étant disposé à l'intérieur de l'entourage extérieur (1);
dans lequel, il est prévu, le long de la périphérie de la partie du col de l'organe de verrouillage (2) plusieurs rainures réceptrices (21) de forme sphérique et dans lequel les billes en acier (3) sont engagées dans les rainures réceptrices (21); dans lequel l'organe de verrouillage (2) effectue le positionnement radial avec l'entourage extérieur denté (1) au moyen des billes en acier (3);
dans lequel l'extrémité arrière de l'organe de verrouillage (2) est pourvue d'une rainure d'insertion (22) de forme annulaire et dans lequel à l'intérieur de la rainure d'insertion (22) de forme annulaire est disposé un ressort de pincement (6);
dans lequel l'extrémité arrière de l'organe de verrouillage est pourvue d'un maintien de ressort (5), dans lequel le maintien de ressort (5) effectue le positionnement axial avec l'organe de verrouillage (2), par le ressort de pincement (6) et dans lequel le maintien de ressort (5) est lié avec une extrémité du ressort (4), alors que l'autre extrémité du ressort (4) prend appui contre une surface d'extrémité interne de l'entourage extérieur denté (1),
**caractérisé en ce que**,
l'extrémité antérieure de l'entourage extérieur denté (1), présente une denture intérieure, dans lequel la denture intérieure de l'entourage extérieur denté (1) est adaptée à une denture extérieure (1) correspondante de l'outil à entraînement électrique, dans lequel, une prise est rendue possible par la denture intérieure de l'entourage extérieur denté (1) avec la denture correspondante de l'outil à entraînement électrique, et un arrêt de l'outil à entraînement électrique dans la direction périphérique.

2. Dispositif de couplage pour coupler un outil à entraînement électrique avec un dispositif d'angle, selon la revendication 1, **caractérisé en ce que** l'extrémité arrière de l'organe de verrouillage (2) est adaptée aux composants axiaux d'entrée de la partie antérieure du dispositif angulaire.
